# EUROPEAN PATENT APPLICATION

(11) **EP 2 594 438 A1**
(43) Date of publication of application: **22.05.2013**
(21) Application number: 11189382.2
(22) Date of filing: 16.11.2011
(51) Int. Cl.: B60R 19/20, B60R 21/36

(54) **Inflatable device and deployable vehicle front surface with inflatable device**

(71) Applicant: Volvo Car Corporation, 40531 Göteborg (SE)
(72) Inventor: Mendis, Kolita, Redmond, WA Washington 98052 (US); Wessman, Björn, Thousand Oaks, CA California 91362 (US); Frasier, Douglas, Newbury Park, CA California 91320 (US); Crona, Ragnar, 43638 Askim (SE)

(57) **Abstract**

The present invention relates to an inflatable, energy-absorbing device (1) to be positioned behind a deployable front surface (2) of a vehicle (3) for pedestrian protection and low speed crash damage mitigation. The inflatable, energy-absorbing device (1) is configured to, upon actuation thereof by means of a sensor system (4) for detecting approaching or actual impacts, inflate and thereby deploy the front surface (2) of the vehicle (3) in the driving direction of the vehicle (3). The present invention also relates to a deployable soft nose structure. According to the invention, the inflatable, energy-absorbing device (1) comprises at least one airbag (1 a) of a drop stitch material comprising at least an outer and an inner layer of fabric and an internal reinforcement in the form of one or more internal stitchings which extends/extend around the airbag (1 a) between opposing surfaces of the outer and inner layers of fabric. According to the invention, the deployable soft nose structure comprises a deployable front surface (2) and at least one inflatable, energy-absorbing device (1) as defined above, positioned behind said deployable front surface (2).

## Description

### TECHNICAL FIELD

The present invention relates to an inflatable, energy-absorbing device at a deployable front surface of a vehicle for pedestrian protection and low speed crash damage mitigation, said inflatable, energy-absorbing device being configured to, upon actuation thereof by means of a sensor system for detecting approaching or actual impacts, inflate and thereby deploy the front surface of the vehicle in the driving direction of the vehicle. The present invention also relates to a deployable soft nose structure of a vehicle for pedestrian protection and low speed crash damage mitigation, comprising, inter alia, at least one inflatable, energy-absorbing device.

### BACKGROUND OF THE INVENTION

Pedestrian safety requires provision for energy absorption in front of the bumper at an appropriate force level in order to minimize injury in the lower leg region. Low speed crash safety requirements also require provision of energy absorbing material to minimize damage and reduce insurance costs. Furthermore, the force distribution and magnitude for lower leg impact energy absorption and for low speed energy absorption are markedly different. These energy absorbing zones add weight to and also increase the length of the front of the vehicle, which can be detrimental for aesthetic reasons because the front overhang ahead of the front axle is extended.

US 7 004 532 B2 to Plastal SpA, Italy, relates to a structure for the front of a vehicle, of the type with control of deformation for the safeguard of a pedestrian. The structure, made of thermoplastic members, cooperates with a sensor to detect approaching or actual impacts and includes at least one airbag which is placed below a front bonnet component. The front part of the vehicle has a "soft nose" shape, which in case of collision with a pedestrian, inter alia, slightly increases the vertical surface of impact, thereby improving the effect on the typology of injuries. The one or more airbags contribute upon actuation to this increase of the vertical surface of impact.

US 6 637 788 B1 to Bayer AG, Germany, relates to a safety bumper comprising an energy-absorbing element controlled by an impact sensor. The safety bumper comprises, inter alia, at least one inflatable energy-absorbing element above a mounting member of the safety bumper and an inflatable energy-absorbing element below said mounting member. The inflatable energy-absorbing elements are controlled by an impact sensor and are deployed upon actuation to form a continuous contour and common front with a bumper basic body of plastic material.

The inflatable energy-absorbing elements or airbags forming part of the prior art front safety structures of vehicles are generally not optimally designed for their intended function.

### SUMMARY OF THE INVENTION

An object of the present invention is therefore to provide an improved inflatable, energy-absorbing device of optimum design, reliable operation and which is easy to manufacture.

To this end, the inflatable energy-absorbing device comprises at least one airbag of a drop stitch material comprising at least an outer and an inner layer of fabric and an internal reinforcement in the form of one or more internal stitchings which extends/extend around the airbag between opposing surfaces of the outer and inner layers of fabric.

The one or more internal stitchings may extend around the airbag in a horizontal plane and/or in a vertical plane and/or in any other plane between said horizontal and vertical planes.

Two or more internal stitchings extending in parallel planes, may extend at a distance from each other of about 1-50 millimeters.

The one or more internal stitchings may be endless, i.e. an internal stitching extends without interruption around the entire airbag, thereby facilitating machine sewing of the internal stitchings.

The drop stitch material is according to one embodiment of the invention provided with an external airtight layer on the outer surface of the outer layer of fabric.

This external airtight layer may be made of vinyl.

The airbag may have a volume of up to about 100 litres.

The object of the present invention is also, as mentioned above, to provide an improved deployable soft nose structure.

The above object is achieved by configuring the deployable soft nose structure according to the invention such that it comprises a deployable front surface and at least one inflatable, energy-absorbing device in the form of at least one internally reinforced airbag of a drop stitch material with an internal reinforcement as defined above, positioned behind said deployable front surface.

According to one embodiment of the deployable soft nose structure, the deployable front surface comprises at least one bumper cover plate which covers a bumper beam, whereby the inflatable, energy-absorbing device is located between the bumper cover plate and the bumper beam.

Thus, a soft nose structure of, for instance, plastic and which defines the front surface of the vehicle, located in front of the bumper beam, is deployed forwardly by means of the inflatable, energy-absorbing device positioned behind it. Inflation of the inflatable energy-absorbing device is triggered by the pre-crash sensor system. The inflatable energy-absorbing device is, as defined, an internally reinforced airbag. The internal reinforcement in the airbag comprises one or more internal stitchings extending around the entire airbag between opposing surfaces of the at least two layers of fabric of which the airbag is manufactured, i.e. a material commonly known as "drop-stitch" fabric is used, which prevents the airbag from bulging outward elsewhere when compressed locally, and which allows for better control of pressure and therefore, of force. A pedestrian leg-form for instance would push through the plastic soft nose and compress the airbag in a localized area, whereas a wider object used for a low speed test would compress a wider surface of the soft nose and airbag.

The use of an internally reinforced airbag according to the present invention provides several advantages.

Thus, an internally reinforced airbag of a drop-stitch material allows for a non-circular airbag cross section which can be curved in plan view such that the airbag can for instance follow the curvature of the bumper beam. It can be packed and made to inflate from behind the soft nose. Therefore, it can also be made to retract by sucking the air used for inflation out of the airbag, unlike a typical inflated airbag which would normally be impossible to retract neatly for repacking. This feature allows the airbag to be reused and inflated conservatively. Conservative inflation means that the inflation will not be expensive to repair and the burden on the pre-crash sensor system can be reduced, i.e. the bur-den to accurately identify that the identified object to be impacted is indeed what it is and that the impact event is definitely going to happen.

A drop stitch airbag is more flat when inflated. An airbag of tubular shape will be less stable, i.e. more prone to rolling.

When a traditional airbag is loaded with a concentrated force, it will bulge out everywhere exept at the loading area. An internally reinforced airbag of a drop stitch material does not bulge out because the internal stitches constrain any outward bulging from inside. A problem with pedestrian bumper airbags is the bulging tendency, which causes bottoming out with a leg impact, which means that localized compression on a large airbag will push right through until the supporting structure behind it is reached, because bulging occurs elsewhere. This is avoided with an internally reinforced airbag of a drop stitch material. The soft nose can also distribute the pressure over the airbag.

Finally, it is possible to regulate the venting pressure to be appropriate for a pedestrian impact or a low speed impact with an object.

### BRIEF DESCRIPTION OF THE DRAWINGS

The present invention will be further described below by way of example only and with reference to the accompanying drawings, in which
Fig. 1 is a schematic side view of an inflatable, energy-absorbing device as well as of a bumper beam and a lower stiffener (spoiler/bar) of the front structure of a vehicle, said inflatable energy-absorbing device being in a non-operative position.
Fig. 2 is a schematic side view of the inflatable, energy-absorbing device, the bumper beam and the lower stiffener (spoiler/bar) of Fig. 1, with the inflatable energy-absorbing device being in an operative position.
Fig. 3 is a schematic side view of the inflatable, energy-absorbing device, the bumper beam and the lower stiffener (spoiler/bar) of Fig. 1 and 2, illustrating their location in the front structure of the vehicle behind a deployable front surface of said front structure and with the inflatable energy-absorbing device being in the non-operative as well as the operative position.
Fig. 4a-c schematically illustrate the inflation of the inflatable energy-absorbing device and thereby, the deflation of the deployable front surface of the front structure of a vehicle during a crash.

### DETAILED DESCRIPTION OF A PREFERRED EMBODIMENT

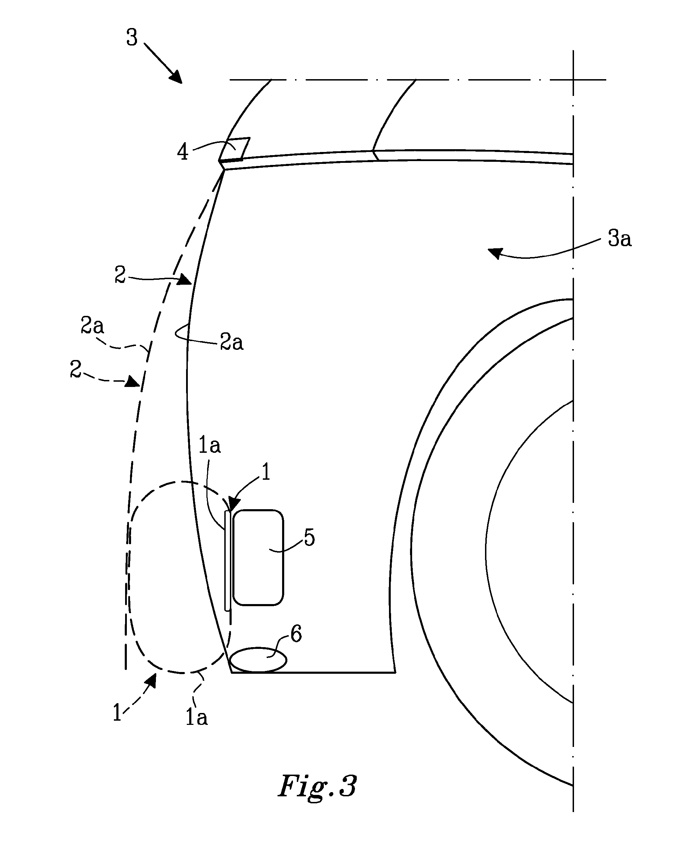

As already mentioned, the present invention relates to an inflatable energy-absorbing device 1. This inflatable, energy-absorbing device 1 is positioned behind a deployable front surface 2 of a vehicle 3 of which the front structure 3a is illustrated in Fig. 3.

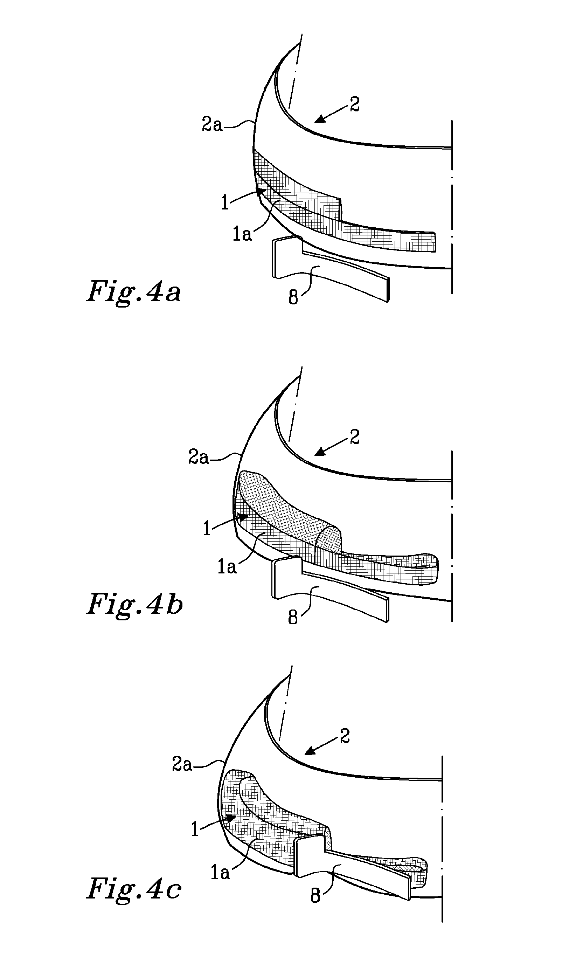

The inflatable, energy-absorbing device 1 and the deployable front surface 2 are configured for pedestrian protection and low speed crash damage mitigation. Therefore, the deployable front surface 2 comprises, in the illustrated embodiment, at least one bumper cover plate 2a, which together with the inflatable, energy-absorbing device 1 defines a deployable so called "soft nose" structure, which in case of collision with a pedestrian, inter alia, slightly increases the vertical surface of impact and thereby considerably improves the effect on the typology of injuries. The front surface 2/bumper cover plate 2a is to this end made of a material, for instance a plastic material, and/or constructed and/or mounted in a manner known per se. The deployable front surface 2 may comprise additional deployable members of the front structure 3a of the vehicle 3, for instance the bonnet (not shown) of the vehicle 3. The inflatable energy-absorbing device 1 is configured to, upon actuation thereof by means of a sensor system 4 for detecting approaching or actual impacts, inflate and thereby deploy the front surface 2/bumper cover plate 2a of the vehicle 3 in a forward direction, i.e. in the driving direction of the vehicle, to thereby reduce possible injuries on the pedestrians or on any object. This deployment of the front surface 2/bumper cover plate 2a for, inter alia, increasing the vertical surface of impact is illustrated in Fig. 3 and Fig. 4a-c. As illustrated in Fig. 3, the increase of the vertical surface of impact is made possible since the front surface 2/bumper cover plate 2a is pivotally mounted at the top thereof and by moving lower parts of the front surface 2/bumper cover plate 2a a distance in forward direction which is larger than the distance of movement of upper parts thereof. As already mentioned, Fig. 4a-c illustrate one way of how the inflation of the inflatable, energy-absorbing device 1 and thereby, the deflation of the deployable front surface 2/bumper cover plate 2a of the front structure 3a of a vehicle 3 progress during a crash with for instance an object. This object, having the reference numeral 8, may for instance be another vehicle or a pedestrian. From for instance Fig. 4b it is clearly evident how the inflatable, energy-absorbing device 1 has been triggered by the sensor system 4 and begun to inflate and deploy the deployable front surface 2/bumper cover plate 2a already before the crash.

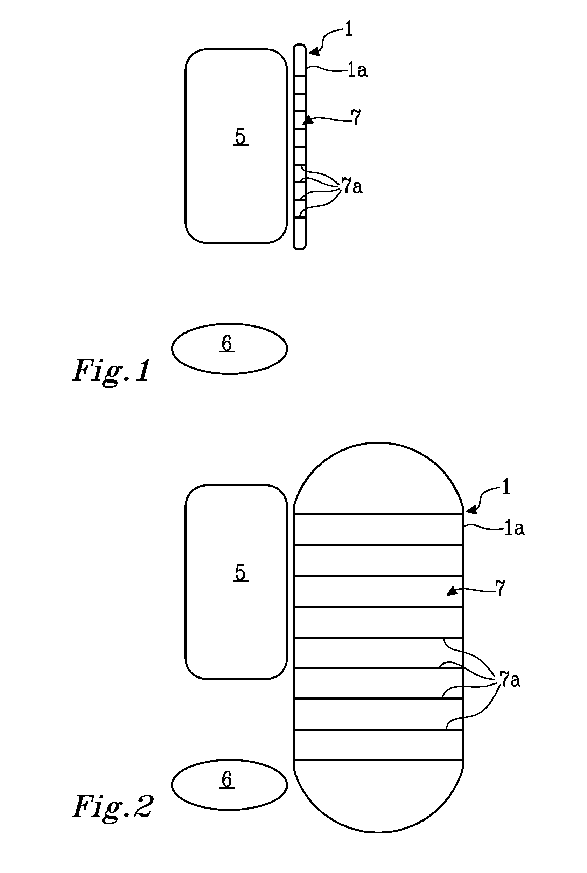

As indicated, the bumper cover plate 2a covers a bumper beam 5 forming part of the front structure 3a of the vehicle 3. Thus, the inflatable, energy-absorbing device 1 is in non-operative as well as operative position situated between the bumper cover plate 2a and the bumper beam 5, in the illustrated embodiment substantially in front of the bumper beam 5. The inflatable, energy-absorbing device 1 may be situated close to the bumper beam 5 and even be mounted thereon. As shown in Fig. 2 and 3, the bumper cover plate 2a also covers a lower stiffener 6 in the form of for instance a spoiler or bar. In inflated, operative condition, the inflatable, energy-absorbing device 1 may then also cover the bumper beam 5 as well as the lower stiffener 6, using these members as a counterstay or support for deployment of the bumper cover plate 2a. In inflated, operative position, the inflatable, energy-absorbing device 1 has displaced or moved lower parts of the bumper cover plate 2a, situated substantially opposite to the bumper beam 5 and the lower stiffener 6, a distance in forward direction which is larger than the distance of movement of the parts of the bumper cover plate 2a situated above these lower parts. Inflation of the inflatable, energy-absorbing device 1 thereby generates a space (occupied by the inflatable, energy-absorbing device 1) between the bumper cover plate 2a and the bumper beam 5 and the lower stiffener 6 respectively, for reducing injuries or damages caused by a collision with a pedestrian or a vehicle.

According to the invention, the inflatable, energy-absorbing device 1 comprises at least one internally reinforced, adaptive airbag 1 a. The airbag 1 a is adaptive in the sense that for instance the pressure inside the one or more airbags 1 a can be regulated for different purposes. Only one airbag 1 a is shown in the drawings. The airbag 1 a is manufactured of a drop stitch material comprising at least two substantially parallel layers of fabric, one outer and one inner layer of fabric, as well as an internal reinforcement 7 in the form of one or more internal stitchings 7a which extends/extend around the airbag 1 a between opposing surfaces of the outer and inner layers of fabric, such that the airbag 1 a is strengthened at least in its primary direction of inflation for deployment of the front surface/bumper cover plate 2 and such that manufacture of the airbag 1 a is facilitated. Even if the airbag 1 a comprises a drop stitch material which in turn comprises at least two layers of fabric, the airbag 1 a is illustrated in the drawings with one layer of fabric only. Machine sewing of the one or more internal stitchings 7a is made possible in a simple way if for instance the one or more internal stitchings 7a are endless and each internal stitching 7a extends without interruption around the airbag 1 a between the two layers of fabric. As an alternative however, each internal stitching 7a extending around the airbag 1 a may comprise or be divided into two or more individual stitching portions. In order to provide optimum strength, the one or more internal stitchings 7a may extend around the airbag 1 a in a horizontal plane and/ /or in a vertical plane and/or in any other plane between said horizontal and vertical planes. In the illustrated embodiment of Fig. 3, the many internal stitchings 7a extend around the airbag 1 a in horizontal planes, i.e. inter alia in substantially the same direction as the front surface/bumper cover plate 2 of the vehicle 3 is deployed (see Fig. 2 and 3). Thus, in case of more than one stitching 7a, the stitchings 7a may extend in parallel to each other, for instance in parallel horizontal planes, for optimum function. Two or more internal stitchings 7a extending in parallel planes, may extend at a distance from each other of from one or more millimeters to one or more centimeters, for instance at a distance from each other of about 1-50 millimeters, depending on the desired function and/or the size of the airbag 1 a. The distance between the internal stitchings 7a in parallel planes may vary in the direction of extension of the airbag 1 a perpendicular to said parallel planes, and so may also the distance between the internal stitchings 7a of parallel planes in different directions of extension of the airbag 1 a.

For optimum function, the one or more airbags 1 a comprises, as already mentioned, a drop stitch material. "Drop stitch" is a knitting technique for producing open stripes in a garment. The basic idea is to knit a solid fabric, then drop one or more stitches to produce a run (or ladder) in the fabric. Drop stitch fabrics may be produced as a double cloth, with an extra interlocking warp, in order to produce inflatable walls, i.e. the internal reinforcing stitchings 7a are looped between two layers of fabric as defined above. A drop stitch structure will also be rapid to inflate and deflate. It is also possible to thereby make an inflatable surface absolutely flat on the outside as well as on the inside of the airbag 1 a. Drop stitch structures have a very high working pressure. Making an airbag for the intended purpose of a drop stitch material produces an optimally operating airbag with advantageous characteristics regarding the most desired properties for an airbag.

The drop stitch material according to the invention may also be provided with an external airtight layer (not shown) on the outer surface of the outer layer of fabric. The external airtight layer may for instance be made of vinyl.

The volume of the airbag 1 a according to the invention may vary depending on the intended use and function. Accordingly, the airbag 1 a may have a volume of up to about 100 litres.

Thus, as already mentioned above, the inflatable, energy-absorbing device 1 according to the invention, comprising an airbag 1 a of a drop stitch material comprising inner and outer layers of fabric and an internal reinforcement 7 in the form of one or more internal stitchings 7a that extends/extend around the airbag 1 a between opposing surfaces of the outer and inner layers of fabric, has several advantages compared to conventional airbags. The airbag 1 a need not be circular in cross section. Instead, it may have a more flat design and for instance follow the curvature of the bumper beam 5. The airbag 1 a will not bulge out at unloaded areas thereof. The pressure inside the airbag 1 a may be regulated as desired for the intended purpose of the airbag 1 a. The airbag 1 a may be vented and deflated for reuse.

Accordingly, since the space between the bumper cover plate 2a and the bumper beam 5 is small, it is an essential advantage that the airbag 1 a comprises a drop stitch material such that the airbag 1 a can be given a flat design and, when inflated, exert its inflation force against the bumper cover plate 2a without substantial bulging out in directions where there are no components to be deployed. As illustrated, when the airbag 1 a is inflated, it expands forward and, to a certain extent, downward to the lower stiffener 6, using the bumper beam 5 and lower stiffener 6 as counterstays or supports for deployment of the bumper cover plate 2a in a forward, driving direction of the vehicle 3.

It is obvious to a skilled person that the inflatable, energy-absorbing device 1 according to the present invention may be modified and altered within the scope of the subsequent claims without departing from the idea and purpose of the invention. Thus, it is obvious that the inflatable, energy-absorbing device 1 may be used at other locations behind a deployable front surface 2 at a deployable soft nose structure than in front of a bumper beam 5. It may for instance be used also under the bonnet of the front structure 3a of the vehicle 3 if the bonnet forms part of the deployable front surface 2. Furthermore, as indicated above, the one or more internal stitchings 7a may be provided in any desired pattern as long as the operation of the inflatable, energy-absorbing device 1 is not obstructed. Thus, any one internal stitching 7a may extend in a horizontal plane, in a vertical plane or in any other plane through the inflatable, energy-absorbing device 1 and any one internal stitching 7a may be endless or comprise several individual stitching portions. Two or more internal stitchings 7a may extend in parallel to each other in any plane through the inflatable, energy-absorbing device 1 or in different planes.

## Claims

1. Inflatable, energy-absorbing device (1) to be positioned behind a deployable front surface (2) of a vehicle (3) for pedestrian protection and low speed crash damage mitigation, said inflatable energy-absorbing device (1) being configured to, upon actuation thereof by means of a sensor system (4) for detecting approaching or actual impacts, inflate and thereby deploy the front surface (2) of the vehicle (3) in the driving direction of said vehicle (3), **characterized in that** the inflatable, energy-absorbing device (1) comprises at least one airbag (1 a) of a drop stitch material comprising at least an outer and an inner layer of fabric and an internal reinforcement (7) in the form of one or more internal stitchings (7a) which extends/extend around the airbag (1a) between opposing surfaces of the outer and inner layers of fabric.

2. Inflatable, energy-absorbing device according to claim 1, **characterized in that** said one or more internal stitchings (7a) extends/extend around the airbag (1a) in a horizontal plane and/or in a vertical plane and/or in any other plane between said horizontal and vertical planes.

3. Inflatable, energy-absorbing device according to claim 2, **characterized in that** two or more internal stitchings (7a) extending in parallel planes, extend at a distance from each other of about 1-50 millimeters.

4. Inflatable, energy-absorbing device according to any one of claims 1-3, **characterized in that** said one or more internal stitchings (7a) are endless.

5. Inflatable, energy-absorbing device according to any one of claims 1-4, **characterized in that** the drop stitch material is provided with an external airtight layer on the outer surface of the outer layer of fabric.

6. Inflatable, energy-absorbing device according to claim 5, **characterized in that** the external airtight layer is made of vinyl.

7. Inflatable, energy-absorbing device according to any one of claims 1-6, **characterized in that** the airbag (1 a) has a volume of up to about 100 litres.

8. Deployable soft nose structure of a vehicle (3) for pedestrian protection and low speed crash damage mitigation, **characterized in that** the deployable soft nose structure comprises a deployable front surface (2) and at least one inflatable, energy-absorbing device (1) according to any one of claims 1-7 positioned behind said deployable front surface (2).

9. Deployable soft nose structure according to claim 8, **characterized in that** said deployable front surface (2) comprises at least one bumper cover plate (2a) which covers a bumper beam (5), said inflatable, energy-absorbing device (1) being located between said bumper cover plate (2a) and said bumper beam (5).
